# EUROPÄISCHE PATENTSCHRIFT

(11) **EP 3 769 050 B1**
(45) Veröffentlichungstag und Bekanntmachung des Hinweises auf die Patenterteilung: **26.04.2023**
(21) Anmeldenummer: 19717764.5
(22) Anmeldetag: 21.03.2019
(51) Int. Cl.: G01F 1/66, G01F 1/667, G01N 29/024

(54) **VERFAHREN ZUR NICHTINVASIVEN BESTIMMUNG DES FLUSSES ODER DER DURCHFLUSSRATE IN EINEM VON EINEM GASFÖRMIGEN MEDIUM DURCHSTRÖMTEN, ELEKTRISCH LEITENDEN OBJEKT SOWIE AKUSTISCHER DURCHFLUSSMESSER ZUR DURCHFÜHRUNG DES VERFAHRENS**
METHOD FOR NON-INVASIVE DETERMINATION OF THE FLOW OR OF THE FLOW RATE IN AN ELECTRICALLY CONDUCTIVE OBJECT THROUGH WHICH A GASEOUS MEDIUM FLOWS, AND ACOUSTIC FLOW METER FOR CARRYING OUT THE METHOD
PROCÉDÉ POUR LA DÉTERMINATION NON INVASIVE DU FLUX OU DU DÉBIT DANS UN OBJET ÉLECTRIQUEMENT CONDUCTEUR TRAVERSÉ PAR UN MÉDIUM GAZEUX AINSI QU'UN DÉBITMÈTRE ACOUSTIQUE POUR L'EXÉCUTION DU PROCÉDÉ

(30) Priorität: 21.03.2018 DE 102018106736; 14.09.2018 DE 102018122584
(43) Veröffentlichungstag der Anmeldung: 27.01.2021
(73) Patentinhaber: Rosen Swiss AG, 6370 Stans (CH)
(72) Erfinder: BRÜCHER, Martin, 48488 Emsbüren (DE); BAUERNSCHMITT, Rüdiger, 76351 Linkenheim-Hochstetten (DE); RODRIGUEZ, Natalia, 7522 CR Enschede (NL)
(74) Vertreter: Wischmeyer, André
(86) Internationale Anmeldenummer: PCT/EP2019/057142
(87) Internationale Veröffentlichungsnummer: WO 2019/180168

(56) Entgegenhaltungen:
- WO-A2-2011/078691
- WO-A2-2011/078691
- US-A1- 2015 260 561
- US-A1- 2015 260 561
- US-A1- 2016 320 219
- US-A1- 2016 320 219
- US-A1- 2018 149 505

## Beschreibung

Die vorliegende Erfindung betrifft ein Verfahren zur nichtinvasiven Bestimmung des Flusses oder der Durchflussrate in einem von einem gasförmigen Medium durchströmten, elektrisch leitenden Objekt, insbesondere in einem Rohr oder einer Pipeline, mittels eines akustischen Durchflussmessers.

Bei herkömmlichen, nichtinvasiven, akustischen Durchflussmessern wird durch einen an oder nahe der Objektwand angeordneten Sendewandler eine insbesondere als Lamb-Welle ausgebildete Ultraschallwelle in dem Objekt erzeugt, die teilweise als Longitudinalwelle in das Medium einkoppelt. Von einem in Längsrichtung des Objekts vom Sendewandler beabstandeten, an oder nahe der Objektwand angeordneten Empfangswandler wird ein Nutzsignal detektiert, dass sich zumindest teilweise aufgrund der Longitudinalwelle ergibt. Aus dem Nutzsignal wird über eine Auswertevorrichtung der Fluss oder die Durchflussrate des Mediums bestimmt. Beispielsweise offenbart die US 2015/260561 A1 einen solchen Durchflussmesser.

Bei gasförmigen Medien sind derartige Messungen problematisch, da aufgrund der schlechten akustischen Kopplung zwischen dem Material des Objekts, insbesondere dem Rohrstahl, und dem gasförmigen Medium nur ein Bruchteil der vom Sendewandler erzeugten Ultraschallwelle in das Medium einkoppelt. Dies führt zu einem relativ kleinen Nutzsignal, das in der Regel um etwa einen Faktor 50 bis 10.000 kleiner ist als das vom Hauptstrahl der Ultraschallwelle erzeugte Signal. Zur Detektion des Nutzsignals muss der Empfangswandler daher regelmäßig stark verstärkt werden, wodurch beim Zuschalten der Verstärkung ("gain change") Störsignale entstehen, die eine Auswertung der Messung erschweren. Ferner kann das Nutzsignal durch korreliertes Rauschen verzerrt werden, das durch Reflexionen der Ultraschallwelle an mechanischen Strukturen, wie Fehlstellen, Schweißnähten und vor allem Kontaktstellen einer Sensormechanik des Durchflussmessers, entstehen.

Die WO 2011/078691 A2 offenbart ein Verfahren zur nichtinvasiven Bestimmung der Durchflussrate eines Mediums, bei dem ein sich ausschließlich durch die Objektwand ausbreitender Teil einer Ultraschallwelle als Referenzsignal verwendet wird. Bei der Messung von gasförmigen Medien übersteigt die Stärke des Referenzsignals allerdings die Stärke des aufgrund der schlechten akustischen Kopplung relativ schwachen Nutzsignals. Daher müsste auch hier der Empfangswandler zur Detektion des Nutzsignals verstärkt werden, wodurch beim Zuschalten der Verstärkung ("gain change") Störsignale entstehen, die eine Auswertung der Messung erschweren.

Aufgabe der vorliegenden Erfindung ist es daher, ein Verfahren zur akustischen Durchflussmessung auszubilden, das eine verbesserte Messung bzw. Bestimmung des Flusses eines gasförmigen Mediums oder der Durchflussrate ermöglicht. Weiterhin ist es die Aufgabe der vorliegenden Erfindung, einen verbesserten akustischen Durchflussmesser auszubilden, der eine verbesserte Messung bzw. Bestimmung des Flusses oder der Durchflussrate eines gasförmigen Mediums ermöglicht.

Die Aufgabe wird gelöst durch ein Verfahren gemäß Anspruch 1 und/oder Anspruch 2 sowie durch eine Vorrichtung gemäß Anspruch 13. Vorteilhafte Weiterbildungen der Erfindung sind hierauf rückbezogenen Unteransprüchen sowie der nachfolgenden Beschreibung zu entnehmen.

Bei dem erfindungsgemäßen Verfahren zur nichtinvasiven Bestimmung des Flusses oder der Durchflussrate in einem von einem gasförmigen Medium durchströmten, elektrisch leitenden Objekt, insbesondere in einem Rohr oder einer Pipeline, mittels eines akustischen Durchflussmessers, wird in Umfangsrichtung um eine Längsachse des Objekts an oder nahe der Objektwand ein Sendewandler des Durchflussmessers und in Längsrichtung des Objekts beabstandet an oder nahe der Objektwand ein Empfangswandler des Durchflussmessers angeordnet. Mittels des Sendewandlers wird eine insbesondere als Lamb-Welle ausgebildete Ultraschallwelle in dem Objekt erzeugt, die teilweise als Longitudinalwelle in das Medium einkoppelt. Ein Nutzsignal, das sich zumindest teilweise aufgrund der Longitudinalwelle ergibt, wird von dem Empfangssender detektiert, wobei über eine Auswertevorrichtung aus dem Nutzsignal der Fluss oder die Durchflussrate bestimmt wird. Dabei wird der Sendewandler in Umfangsrichtung um eine Längsachse des Objekts in einer ersten Position und der Empfangswandler in einer relativ zur ersten Position um die Längsachse herum variierten zweiten Position außerhalb des Hauptstrahls der Ultraschallwelle angeordnet. Die Breite des Hauptstrahls der Ultraschallwelle wird dabei auf einen Sektor zwischen zwei Kontaktstellen einer Sensormechanik über die Durchflussmesser an dem Objekt befestigt und insbesondere geklemmt ist, beschränkt. Insbesondere sind die Kontaktstellen bezogen auf den Hauptstrahl und in Ausbreitungsrichtung der Ultraschallwelle hinter dem Empfangswandler angeordnet. Vorzugsweise sind bezogen auf eine Längsachse des Objekts keine Kontaktstellen der Sensormechanik zwischen Sende- und Empfangswandler angeordnet.

Durch die Verwendung dieses Ansatzes wird eine Erzeugung von korreliertem Rauschen aufgrund von Reflexionen an Kontaktstellen der Sensormechanik stark gehemmt, wodurch das um einige Größenordnungen kleinere Nutzsignal besser detektiert und ausgewertet werden kann. Zudem wird der Hauptstrahl der Ultraschallwelle am Empfangswandler vorbeigeführt und somit nicht direkt detektiert. Das wesentlich kleinere Nutzsignal kann daher besser und ohne einen starken Wechsel der Verstärkung detektiert und ausgewertet werden. Dies hat eine verbesserte Bestimmung des Flusses oder der Durchflussrate des gasförmigen Mediums zur Folge.

Sende- oder Empfangswandler können dabei die Objektwand berühren oder berührungslos nahe an der Objektwand angeordnet sein. Hierbei sind Sende- oder Empfangswandler nahe der Objektwand angeordnet, wenn diese eine Ultraschallwelle in der Objektwand erzeugen bzw. ein Nutzsignal detektieren können.

Die Breite des Hauptstrahls wird durch ihre seitlich der Ausbreitungsrichtung der Ultraschallwelle verlaufende Bündelgrenze definiert, bei der die Amplitude des Hauptstrahls auf einen Wert abfällt, der vorzugsweise maximal 10% der Maximalamplitude beträgt. Bei einzelnen Ausführungsbeispielen kann dieser Wert ggf. maximal 30%, bevorzugt maximal 50% der Maximalamplitude betragen.

Als "Sektor" wird ein Bereich der Objektwand bezeichnet. Beispielsweise bei einem rohrförmigen Objekt ist dies aus einer Perspektive in Längsrichtung des Objekts jener Abschnitt der Objektwand, der im Sinne eines "Kreisbogens" zwischen zwei jeweils von der Längsachse des Objekts ausgehenden, durch die Objektwand hindurch und senkrecht dazu verlaufenden Strecken eingegrenzt wird.

Als "gasförmiges Medium" wird auch Dampf, insbesondere Wasserdampf, angesehen. Das gasförmige Medium kann auch ein Gemisch mehrerer Medien darstellen, die insbesondere jeweils gasförmig sind.

Als "Sensormechanik" werden Befestigungselemente beschrieben, die zur Befestigung von Sende- und/oder Empfangswandlern und ggf. weiterer Funktionselemente, wie Magneten, Magnetspulen, elektronischen Bauteilen, etc. an dem Objekt dienen. Ein Gehäuse kann Teil der Sensormechanik sein.

Ferner wird die Aufgabe auch durch ein Verfahren gemäß dem Oberbegriff des Anspruchs 2 gelöst, wobei der Empfangswandler zusätzlich zum Nutzsignal zumindest eine Nebenkeule der Ultraschallwelle detektiert und zumindest ein Nebenkeulensignal in der Auswertung des Nutzsignals zur Bestimmung des Flusses oder der Durchflussrate als Referenzsignal verwendet wird.

Die Einbeziehung zumindest eines Nebenkeulensignals in die Auswertung des Nutzsignals zur Bestimmung des Flusses oder der Durchflussrate ermöglicht es, insbesondere systembedingte Fehler, wie Einflüsse der Elektronik, zu minimieren. Dies insbesondere durch Bildung der Differenz zwischen Nutzsignal und Referenzsignal. Dadurch wird eine präzisere Messung und Bestimmung des Flusses oder der Durchflussrate des gasförmigen Mediums ermöglicht. Im Gegensatz zum Hauptstrahl der Ultraschallwelle, der ein Signal erzeugt, das in der Regel etwa 50 bis 10.000 mal stärker ist als das Nutzsignal, bewegen sich das Nebenkeulensignal und das Nutzsignal in weitestgehend derselben Größenordnung. D.h. Nebenkeulensignal und Nutzsignal unterscheiden sich lediglich um einen Faktor größer 0,1 und kleiner 10. Daher ist die Detektion und Auswertung der Signale und die Bestimmung des Flusses oder der Durchflussrate präziser durchführbar. Sende- und Empfangswandler sowie die zugehörige Elektronik werden entsprechend ausgelegt.

insbesondere umfasst das Verfahren nach Anspruch 2 auch die Merkmale des Verfahrens nach Anspruch 1.

Gemäß einer weiteren Ausführungsform der Erfindung sind Sende- und Empfangswandler dergestalt ausgelegt, dass Nebenkeulensignal und Nutzsignal für die Auswertung verstärkt werden, wobei die Verstärkungsfaktoren in derselben Größenordnung liegen. Dies gilt insbesondere für Nebenkeulen von Lamb-Wellen. Dadurch werden beispielsweise Störsignale, die bei einem "gain change" zwischen zwei Verstärkungsfaktoren unterschiedlicher Größenordnungen entstehen, vermieden, wodurch in der Auswertevorrichtung eine bessere Bestimmung des Flusses oder der Durchflussrate ermöglicht wird. Auch kann alternativ der Dynamikbereich der Auswerteelektronik begrenzt werden, wodurch diese mit geringerem Aufwand realisiert werden kann.

Gemäß einer weiteren bevorzugten Ausgestaltung der Erfindung wird der Empfangswandler in Längsrichtung des Objekts so positioniert, dass sich die Amplituden zweier gegensinnig um die Längsachse des Objekts herumlaufender Nebenkeulen am Empfangswandler überlagern. Dies trägt zur Verstärkung bzw. verbesserten Detektion des Referenzsignals bei, wodurch eine präzisere Bestimmung des Flusses oder der Durchflussrate ermöglicht wird.

Gemäß einer weiteren vorteilhaften Ausgestaltung der Erfindung wird der Empfangswandler aus einer Perspektive in Längsrichtung des Objekts gegenüber dem Sendewandler positioniert, d.h., um eine zentrale Längsachse des Objekts sind Sende- und Empfangswandler um 180° zueinander verschwenkt. Der in Umfangsrichtung somit am weitesten vom Hauptstrahl entfernt positionierte Empfangswandler empfängt weniger durch einen Hauptstrahl erzeugtes, korreliertes Rauschen. Ferner wird durch die symmetrische Anordnung eine optimale Überlagerung von zwei an entgegengesetzten Seiten der Objektwand herumlaufenden Nebenkeulen erreicht, die damit ein verbessertes Referenzsignal bereitstellen. Dadurch ist eine präzisere Bestimmung des Flusses oder der Durchflussrate möglich.

In einer weiteren bevorzugten Ausführungsform der Erfindung wird die Breite des Hauptstrahls der Ultraschallwelle über ein Phased-Array-Setup des zumindest einen Sendewandlers auf Höhe des Empfangswandlers in der Umfangsrichtung auf eine Sektorbreite von weniger als 120° beschränkt. Hierdurch bleibt auf der Höhe des Empfangswandlers aus einer Perspektive in Längsrichtung des Objekts genug Raum frei (ein Sektor von 240°), um den Empfangswandler ohne direkte Beeinflussung durch den Hauptstrahl der Ultraschallwelle anzuordnen. insbesondere wenn Empfangswandler sich über einen geringeren Sektor als 240°erstreckt, kann zudem Raum für Kontaktstellen einer Sensormechanik bereitgestellt werden. Dies führt zu einer weiteren Minimierung des korrelierten Rauschens und zu einer präziseren Bestimmung des Flusses oder der Durchflussrate.

Allgemein ist die Verwendung eines Phased-Array-Setups für die genaue Ausrichtung des Hauptstrahls vorteilhaft. Durch die Verwendung von auf EMAT-Basis arbeitenden Sende- und Empfangswandlern haben sich insbesondere und überraschend Vorteile für Flussmessungen in gasförmigen Medien ergeben. insbesondere können bei einem EMAT-Setup, wie es auch nachfolgend beschrieben ist, Sende- und Empfangswandler quasi unter Verzicht auf eine akustische Kopplung an der Objektwand positioniert werden. Durch die Sensormechanik können sowohl die Wandler als auch weitere Magnete zur Erzeugung eines stationären oder quasi-stationären Magnetfelds am Objekt positioniert werden.

In einer weiteren bevorzugten Ausgestaltung der Erfindung wird der Empfangswandler bezogen auf eine Längsrichtung des Objekts in einem Abstand kleiner D/2 von der Kontaktstelle der Sensormechanik positioniert, wobei D den Außendurchmesser des Rohres beschreibt. Dadurch wird erreicht, dass das Rauschsignal zumindest teilweise, insbesondere größtenteils, an dem Empfangswandler vorbeigelenkt wird. Dies gewährleistet eine präzise Messung und Bestimmung des Flusses bzw. der Durchflussrate.

Gemäß einer weiteren vorteilhaften Ausgestaltung der Erfindung wird der Mittelpunkt des Empfangswandlers bezogen auf eine Längsrichtung des Objekts in einem Abstand kleiner als 1,5*D, vorzugsweise kleiner 4/3*D, von der Kontaktstelle der Sensormechanik positioniert, wobei D den Außendurchmesser des Rohres beschreibt. Dadurch wird ebenfalls erreicht, dass das Rauschsignal zumindest teilweise, insbesondere größtenteils, an dem Empfangswandler vorbeigelenkt wird. Dies gewährleistet eine präzise Messung und Bestimmung des Flusses bzw. der Durchflussrate.

Für den Fall, dass ein Teil der an den Kontaktstellen reflektierten Wellen doch auf den Empfangswandler trifft, wird durch den möglichst klein gewählten Abstand des Empfangswandlers zu den Kontaktstellen erreicht, dass das durch die reflektierten Wellen hervorgerufene Rauschsignal zeitlich vor dem sich langsamer bewegenden Nutzsignal am Empfangswandler ankommt. Auf diese Weise wird eine zeitliche Überlappung des Rauschsignals mit dem Nutzsignal verhindert, was eine präzise Auswertung des Nutzsignals beeinträchtigen würde.

In einer weiteren bevorzugten Ausführungsform der Erfindung wird zur Erzeugung der Ultraschallwelle in dem Objekt ein statisches oder quasi statisches, erstes Magnetfeld erzeugt, welches mit einem von dem Sendewandler in dem oberflächennahen Bereich des Objekt erzeugten, variierenden weiteren Magnetfeld wechselwirkt. Durch ein solches EMAT-Setup können akustisch relevante Kopplungen mit dem Objekt minimiert werden, Sende- und Empfangswandler können als mäanderförmige Leiterbahnen auf eine insbesondere gekrümmte Rohroberfläche aufgelegt werden, ohne dass es zu einer relevanten akustischen Beeinflussung des Nutzsignals kommt. Sende- und Empfangswandler sind insbesondere zur Ausbildung eines Phased-Array-Ansatzes mit mehreren entsprechend beabstandeten Leiterbahnen versehen, die zeitlich unterschiedlich angesteuert werden können.

insbesondere werden ein Paar Sende- und Empfangswandler einerseits und ein weiteres Sende- und Empfangswandler-Paar andererseits am Objekt angeordnet, wobei zur Bestimmung des Flusses oder der Durchflussrate sowohl in Richtung des Flusses sowie in die Gegenrichtung gemessen wird. Durch das Aufnehmen eines Messsignals jeweils in Richtung des Flusses und in die Gegenrichtung können durch einen Vergleich der Messsignale, insbesondere Differenzbildung, weitere Einflussgrößen, wie beispielsweise die Temperatur des Mediums, rechnerisch eliminiert werden. Dadurch ist eine präzise Messung und Bestimmung des Flusses oder der Durchflussrate gewährleistet.

Alternativ wird vorzugsweise als Sende- und/oder Empfangswandler dabei eine Leiteranordnung verwendet, die sowohl zum Senden der Ultraschallwelle als auch zum Empfangen des Nutzsignals und insbesondere des Referenzsignals ausgelegt ist. Durch die Verwendung nur einer Leiteranordnung ggf. aus mehreren Leiterbahnen pro Sende- bzw. Empfangsposition können Störeinflüsse durch eine kompakte Anordnung von Sende- und Empfangswandler umgangen oder minimiert werden. Ferner kann so ein Durchflussmesser kompakter und mit kleinerem Gesamtgewicht realisiert werden, so dass die Kontaktstellen der Sensormechanik kleiner dimensioniert werden können, was zur Minimierung von korreliertem Rauschen führt. Vorzugsweise wird der Sende- und/oder Empfangswandler in einem Frequenzbereich von 50 kHz bis 300 kHz, bevorzugt von 100 kHz bis 210 kHz, betrieben. Der Bereich definiert insbesondere die Frequenz der durch den Sendewandler im Objekt erzeugten Ultraschallwelle. In diesem Frequenzbereich ist eine präzise Bestimmung des Flusses oder der Durchflussrate möglich.

Gemäß dem bereits vor- sowie dem weiter unten nachbeschriebenen wird die eingangs gestellte Aufgabe auch durch einen akustischen Durchflussmesser zur nichtinvasiven Bestimmung des Flusses oder der Durchflussrate in einem von einem gasförmigen Medium durchströmten, elektrisch leitenden Objekt, insbesondere in einem Rohr oder einer Pipeline und zur Durchführung des Verfahrens nach einem der Ansprüche 1 bis 12 gelöst. Der Durchflussmesser weist einen an oder nahe der Objektwand zu positionierenden Sendewandler und einen an oder nahe der Objektwand anzuordnenden Empfangswandler auf. Der Durchflussmesser ist zur Erzeugung einer insbesondere als Lamb-Welle ausgebildeten Ultraschallwelle in dem Objekt und zur Detektion des Nutzsignals ausgelegt und mit einer Sensormechanik zur Verbindung des Durchflussmessers mit dem Objekt versehen. Dazu weist der Durchflussmesser eine Auswertevorrichtung auf, mittels der aus dem Nutzsignal der Fluss oder die Durchflussrate bestimmbar ist. Hierbei ist der Sendewandler in Umfangsrichtung um eine Längsachse des Objekts in einer ersten Position und der Empfangswandler in einer relativ zur ersten Position um die Längsachse herum variierten zweiten Position außerhalb des Hauptstrahls der Ultraschallwelle angeordnet, wobei der Empfangswandler und der Sendewandler bezogen auf eine Längsachse des zwischen diesen anzuordnenden Objekts eine Sektorbreite kleiner 120°, vorzugsweise kleiner oder gleich 90°, insbesondere kleiner 80°, aufweisen und Kontaktmittel der Sensormechanik in Richtung der Längsachse betrachtet außerhalb der vom Empfangswandler und Sendewandler aufgespannten Sektoren angeordnet sind.

Durch diese konstruktive Ausgestaltung wird eine Erzeugung von korreliertem Rauschen aufgrund von Reflexionen an Kontaktstellen der Sensormechanik stark gehemmt, wodurch das deutlich kleinere Nutzsignal besser detektiert und ausgewertet werden kann. Zudem wird der Hauptstrahl der Ultraschallwelle am Empfangswandler vorbeigeführt und somit nicht direkt detektiert. Das wesentlich kleinere Nutzsignal kann daher besser und ohne einen starken Wechsel der Verstärkung detektiert und ausgewertet werden. Dies hat aufgrund reduzierter Einflüsse der Messelektronik eine verbesserte Bestimmung des Flusses oder der Durchflussrate des gasförmigen Mediums dergestalt zur Folge, dass die Anwendung praktikabel wird.

Gemäß einer weiteren vorteilhaften Ausgestaltung der Erfindung sind von dem Sende- zu dem Empfangswandler und bezogen auf eine Längsachse des Objekts die dem Empfangswandler zugeordneten Kontaktmittel hinter dem Empfangswandler angeordnet. Dadurch wird eine Konfiguration ermöglicht, in der der Zwischenraum zwischen Sendewandler und Empfangswandler frei von Kontaktstellen bleibt, wodurch das Entstehen von störenden Reflexionen verhindert wird. Dies erlaubt eine präzisere Messung und Bestimmung des Flusses oder der Durchflussrate.

In einer weiteren bevorzugten Ausgestaltung der Erfindung weist der Sende- und/oder Empfangswandler in Umfangsrichtung eine Erstreckung auf, die das 3-fache bis 10-fache der Wellenlänge, vorzugsweise 4-fache bis 8-fache der Wellenlänge der Ultraschallwelle beträgt. Dies gilt insbesondere für auf EMAT-Basis ausgebildete Leiterbahnen bzw. -schleifen aufweisende Wandler. Bei einer derartigen Auslegung von Sende- und/oder Empfangswandler weist der Hauptstrahl der Ultraschallwelle eine geringe Divergenz auf, so dass dieser optimal am Empfangswandler und insbesondere an den Kontaktstellen der Sensormechanik vorbeigelenkt werden kann. Dadurch kann eine verbesserte Bestimmung des Flusses oder der Durchflussrate erreicht werden.

Vorzugsweise ist der Sende- und/oder Empfangswandler entsprechend einer Wellenlänge im Bereich von 5 mm bis 20 mm, bevorzugt von 10 mm bis 16 mm, ausgebildet. Bei auf EMAT-Basis ausgebildeten, im Wesentlichen parallel verlaufende Leiterbahnen bzw. -schleifen aufweisenden Wandlern wird dadurch insbesondere der Abstand zwischen zwei die gleiche Stromrichtung aufweisenden Leiterbahnenteilstücken definiert. In diesem Wellenlängenbereich ist eine präzise Bestimmung des Flusses oder der Durchflussrate möglich.

Besonders bevorzugt beträgt die Erstreckung (E) des Sende- und/oder Empfangswandlers (2, 4) 25 mm bis 150 mm, bevorzugt 40 mm bis 120 mm, und eine senkrecht zur Erstreckung (E) verlaufende Breite (F) des Sende- und/oder Empfangswandlers (2, 4) 75 mm bis 100 mm, bevorzugt 85 mm. Derartig dimensionierte Wandler ermöglichen eine leichte Handhabung und eine präzise Bestimmung des Flusses oder der Durchflussrate bei den gängigen Wanddicken und Rohrdurchmessern.

Gemäß einer weiteren vorteilhaften Ausgestaltung der Erfindung ist bezogen auf eine Längsrichtung des Objekts der Empfangswandler in einem Abstand kleiner D/2 von der Kontaktstelle der Sensormechanik angeordnet, wobei D den Außendurchmesser des Rohres beschreibt. Dadurch wird ermöglicht, dass das Rauschsignal zumindest teilweise, insbesondere größtenteils, an dem Empfangswandler vorbeigelenkt wird. Dies gewährleistet eine präzise Messung und Bestimmung des Flusses bzw. der Durchflussrate.

In einer weiteren bevorzugten Ausgestaltung der Erfindung wird der Mittelpunkt des Empfangswandlers bezogen auf eine Längsrichtung des Objekts in einem Abstand kleiner 1,5*D, vorzugsweise kleiner 4/3*D, von der Kontaktstelle der Sensormechanik positioniert, wobei D den Außendurchmesser des Rohres beschreibt. Dadurch wird ebenfalls sichergestellt, dass das Rauschsignal zumindest teilweise, insbesondere größtenteils, an dem Empfangswandler vorbeigelenkt wird. Dies gewährleistet eine präzise Messung und Bestimmung des Flusses bzw. der Durchflussrate.

Für den Fall, dass ein Teil der an den Kontaktstellen reflektierten Wellen doch auf den Empfangswandler trifft, wird durch den möglichst klein gewählten Abstand des Empfangswandlers zu den Kontaktstellen erreicht, dass das durch die reflektierten Wellen hervorgerufene Rauschsignal zeitlich vor dem sich langsamer bewegenden Nutzsignal am Empfangswandler ankommt. Auf diese Weise wird eine zeitliche Überlappung des Rauschsignals mit dem Nutzsignal verhindert, was eine präzise Auswertung des Nutzsignals beeinträchtigen würde.

Gemäß einer weiteren vorteilhaften Ausgestaltung der Erfindung werden Sende- und/oder Empfangswandler von einer Leiteranordnung ausgebildet, die sowohl zum Senden der Ultraschallwelle als auch zum Empfangen des Nutzsignals ausgelegt ist. Durch die Messung sowohl in Richtung des Flusses als auch in die Gegenrichtung werden zwei Messsignale erhalten, durch die mittels Vergleich, insbesondere Differenzbildung, weitere Einflussgrößen, wie beispielsweise die Temperatur des Mediums, rechnerisch eliminiert werden können. Dadurch ist eine präzise Messung und Bestimmung des Flusses oder der Durchflussrate gewährleistet.

In einer weiteren bevorzugten Ausgestaltung der Erfindung bildet zumindest ein Kontaktmittel wenigstens eine linienförmige und insbesondere in Längsrichtung des Objekts verlaufende Kontaktstelle zur Anlage an das Objekt aus. Durch diese Ausgestaltung ist eine minimale Kontaktfläche der Kontaktmittel mit dem Objekt gewährleistet, so dass Reflexionen insbesondere des Hauptstrahls nur an sehr begrenzten Stellen entlang des Objektumfangs auftreten können, was eine präzise Bestimmung des Flusses oder der Durchflussrate ermöglicht. Insbesondere sind in Längsrichtung des Objekts verlaufende, linienförmige Kontaktstellen von Vorteil, die im Wesentlichen parallel zur Hauptabstrahlrichtung des Hauptstrahls der Ultraschallwelle verlaufen, so dass aus einer Perspektive in Ausbreitungsrichtung des Hauptstrahls quasi punktförmige Kontaktstellen vorliegen. Dadurch werden Reflexionen weitergehend minimiert.

Alternativ oder zusätzlich bildet zumindest ein Kontaktmittel wenigstens eine punktförmige Kontaktstelle zur Anlage an das Objekt aus. Dabei können mehrere punktförmige Kontaktstellen beispielsweise in Längsrichtung des Objekts in Serie bzw. Reihe hintereinander angeordnet sein. Ferner können die Kontaktmittel aus mehreren punktförmigen Kontaktstellen ausgebildet sein, die in Längsrichtung des Objekts hintereinander und in Umfangsrichtung des Objekts nebeneinander angeordnet sein können. Nebeneinander verlaufende Reihen können auch versetzt zueinander angeordnet werden.

Vorzugsweise besteht zumindest ein Kontaktmittel aus einem harten Material, insbesondere aus Metall. Durch die "harte Kopplung" werden Reflexionen weitergehend minimiert, wodurch eine präzisere Messung und Bestimmung des Flusses oder der Durchflussrate erreicht werden kann.

Weitere Vorteile und Einzelheiten der Erfindung sind der nachfolgenden Figurenbeschreibung zu entnehmen.

In den schematisch dargestellten Figuren zeigen:
- Fig. 1: einen erfindungsgemäßen Gegenstand in einer Prinzipdarstellung,
- Fig. 2: den erfindungsgemäßen Gegenstand gemäß Fig. 1 in einer weiteren, um 90°gedrehten Prinzipdarstellung,
- Fig. 3: eine Abbildung mit Empfangssignalen eines erfindungsgemäßen Durchflussmessers,
- Fig. 4: eine Prinzipskizze gemäß der Erfindung,
- Fig. 5: eine Abbildung einer erfindungsgemäßen Leiteranordnung,
- Fig. 6: eine weitere Prinzipskizze gemäß der Erfindung,
- Fig. 7: ein Element des erfindungsgemäßen Durchflussmessers,
- Fig. 8: ein Simulationsergebnis zur Veranschaulichung einer Nebenkeule.

Gleich oder ähnlich wirkende Teile sind - sofern dienlich - mit identischen Bezugsziffern versehen.

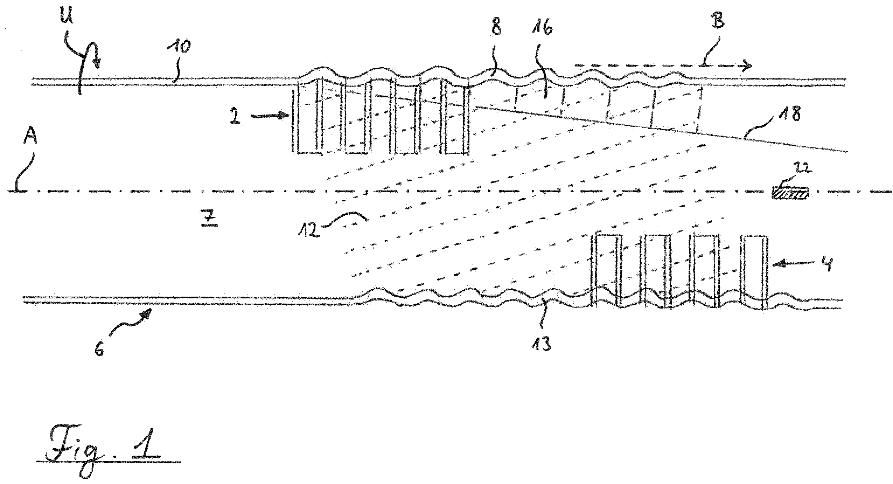

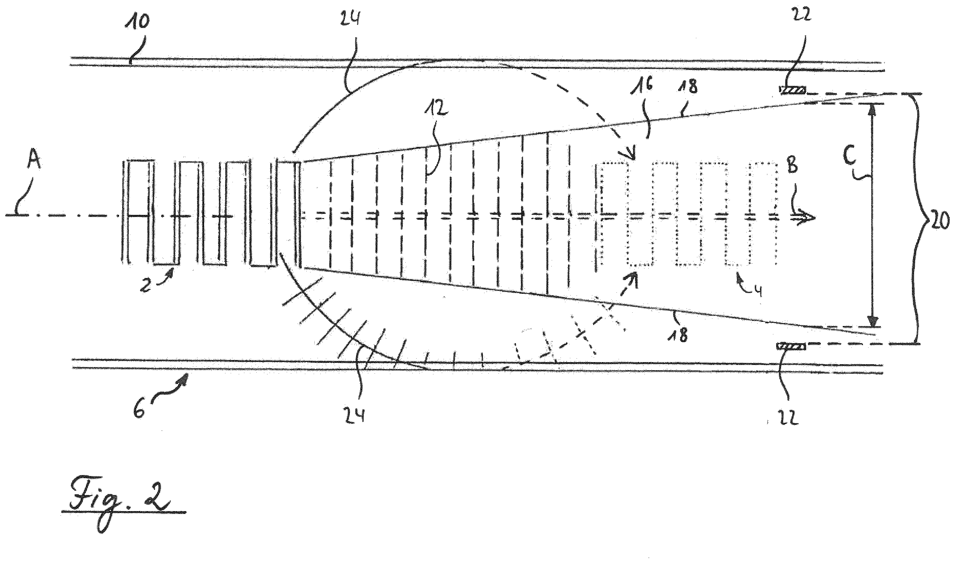

In den Fig. 1 und 2 ist ein erfindungsgemäßer akustischer Durchflussmesser (in Teilen) gezeigt, mit einer als Sendewandler fungierenden ersten Leiteranordnung 2 und einer als Empfangswandler fungierenden zweiten Leiteranordnung 4, die von außen an einem rohrförmigen Objekt 6 angeordnet sind, dessen Längsachse mit A bezeichnet ist und das von einem gasförmigen Medium 7 durchströmt wird. Die erste Leiteranordnung 2 und die zweite Leiteranordnung 4 sind in Längsrichtung des Objekts 6 beabstandet. Die als Sendewandler fungierende erste Leiteranordnung 2 erzeugt eine insbesondere als Lamb-Welle ausgebildete Ultraschallwelle 8 in der Objektwand 10, die teilweise als Longitudinalwelle 12 in das Medium 7 einkoppelt. In einem der ersten Leiteranordnung 2 gegenüberliegenden Bereich der Objektwand 10 wird die Longitudinalwelle 12 in eine insbesondere als Lamb-Welle ausgebildete, Nutzsignal-Ultraschallwelle 13 umgewandelt. Das von der als Empfangswandler fungierenden zweiten Leiteranordnung 4 detektierte Nutzsignal 14 der Nutzsignal-Ultraschallwelle 13 ergibt sich zumindest teilweise aufgrund der Longitudinalwelle 12.

Die Ultraschallwelle 8 hat einen leicht divergierenden Hauptstrahl 16, in dem ein überwiegender Teil der Energie der Ultraschallwelle 8 gebündelt ist und in eine Ausbreitungsrichtung B in der Objektwand 10 transportiert wird. Der Hauptstrahl 16 weist eine Bündelgrenze 18 auf, ab der die Amplitude des Hauptstrahls 16 um 30% geringer als die Maximalamplitude ist. Die erste Leiteranordnung 2 ist in Umfangsrichtung U um die Längsachse A in einer ersten Position und die zweite Leiteranordnung 4 in einer relativ zur ersten Position um die Längsachse A herum variierten zweiten Position außerhalb des Hauptstrahls 16 angeordnet.

Fig. 2 zeigt den erfindungsgemäßen Durchflussmesser teilweise und in Draufsicht auf die als Sendewandler fungierende Leiteranordnung 2. Die Breite C des Hauptstrahls 16 wird auf einen Sektor 20 zwischen zwei Kontaktstellen 22 beschränkt, wobei die Kontaktstellen 22 ferner bezogen auf den Hauptstrahl 16 und in Ausbreitungsrichtung B der Ultraschallwelle 8 hinter der als Empfangswandler fungierenden zweiten Leiteranordnung 4 angeordnet sind. Der Empfangswandler 4 detektiert zusätzlich zum Nutzsignal 14 zwei gegensinnig um die Längsachse A des Objekts 6 herumlaufende Nebenkeulen 24 der Ultraschallwelle 8, wobei zumindest ein Nebenkeulensignal 26 in der Auswertung des Nutzsignals 14 zur Bestimmung des Flusses oder der Durchflussrate als Referenzsignal verwendet wird. Sowohl Sende- als auch Empfangswandler sind mit zumindest zwei Leiterschleifen im Phased-Array-Setup ausgebildet.

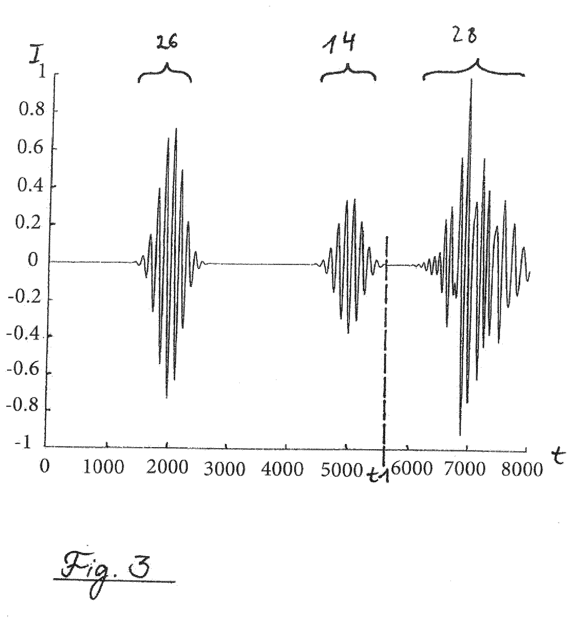

Fig. 3 zeigt ein Beispiel einer zeitlich aufgelösten Messung in beliebigen Einheiten für die Intensität I der Signale und die Zeit t. Das Nebenkeulensignal 26, welches durch die Objektwand 10 vom Sendewandler 2 zum Empfangswandler 4 läuft, kommt einige Zeit vor dem Nutzsignal 14 an, das sich zumindest teilweise aufgrund der in das Medium 7 eingekoppelten Longitudinalwelle 12 ergibt. Das Nebenkeulensignal 26 liegt in derselben Größenordnung wie das Nutzsignal 14 und kann daher optimal als Referenzsignal dienen. So können eine Vielzahl von systematischen Fehlern bzw. Störgrößen wie Einflüsse aus der Elektronik und beispielhaft durch Bildung der Differenz zwischen Nutzsignal 14 und Nebenkeulensignal 26 rechnerisch eliminiert werden.

Ein Rauschsignal 28, das vorwiegend aufgrund von Reflexionen der Ultraschallwelle 8 an vom Durchflussmesser beabstandeten, reflektierenden Strukturen im oder am Rohr, insbesondere Schweißnähten, Flanschen oder Befestigungselementen, entsteht, wird ebenfalls vom Empfangswandler 4 detektiert. Um eine optimale Messung zu gewährleisten, muss sichergestellt werden, dass das Rauschsignal 28 den Empfangswandler 4 zeitlich erst nach dem Abklingen des Nutzsignals 14 (etwa bei der Zeit t1) erreicht.

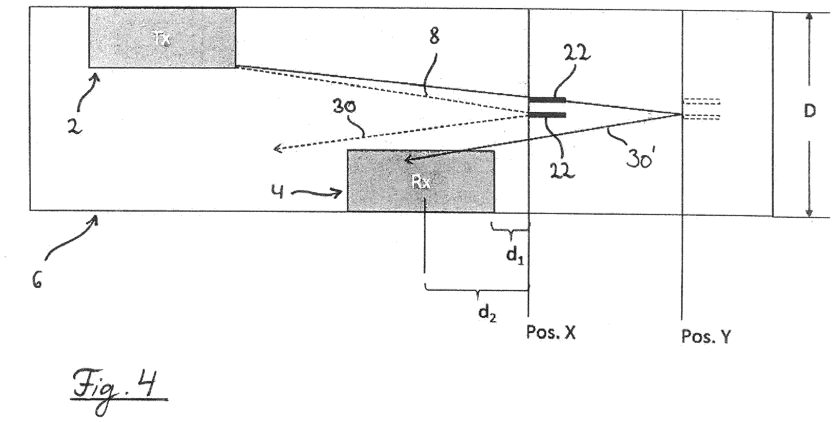

Mit Blick auf Fig. 4 kann durch verschiedene konstruktive Maßnahmen die Intensität von Reflexionen, die an den Kontaktstellen 22 entstehen, verringert werden. Zum einen sind die Kontaktstellen 22 einer zur Befestigung des Durchflussmessers am Objekt 6 vorgesehenen Sensormechanik in Ausbreitungsrichtung B der Ultraschallwelle 8 hinter dem Empfangswandler 4 angeordnet. Zudem ist eine Positionierung und Dimensionierung des Empfangswandlers 4 von Bedeutung. In Abhängigkeit des Außendurchmessers D des Objekts 6 wird der Empfangswandler 4 bezogen auf eine Längsrichtung des Objekts 6 in einem Abstand d1 kleiner D/2 von der Kontaktstelle 22 positioniert. Ferner wird der Mittelpunkt des Empfangswandlers 4 bezogen auf eine Längsrichtung des Objekts 6 in einem Abstand d2 kleiner als 1,5*D, vorzugsweise kleiner als 4/3*D, von der Kontaktstelle 22 positioniert. Eine derartige Anordnung (Pos. X) bewirkt, dass zumindest ein Teil der an den Kontaktstellen 22 reflektierten Wellen 30 nicht auf den Empfangswandler 4 treffen (wie dies in einer alternativen Anordnung gemäß Pos. Y für die reflektierten Wellen 30' der Fall ist).

Für den Fall, dass ein Teil der an den Kontaktstellen 22 reflektierten Wellen 30 doch auf den Empfangswandler 4 trifft, wird durch den möglichst klein gewählten Abstand d1, d2 erreicht, dass das durch die reflektierten Wellen 30 hervorgerufene Rauschsignal zeitlich vor dem sich langsamer bewegenden Nutzsignal 14 am Empfangswandler 4 ankommt. Auf diese Weise wird eine zeitliche Überlappung dieses Rauschsignals mit dem Nutzsignal 14 verhindert, was eine präzise Auswertung des Nutzsignals 14 beeinträchtigen würde.

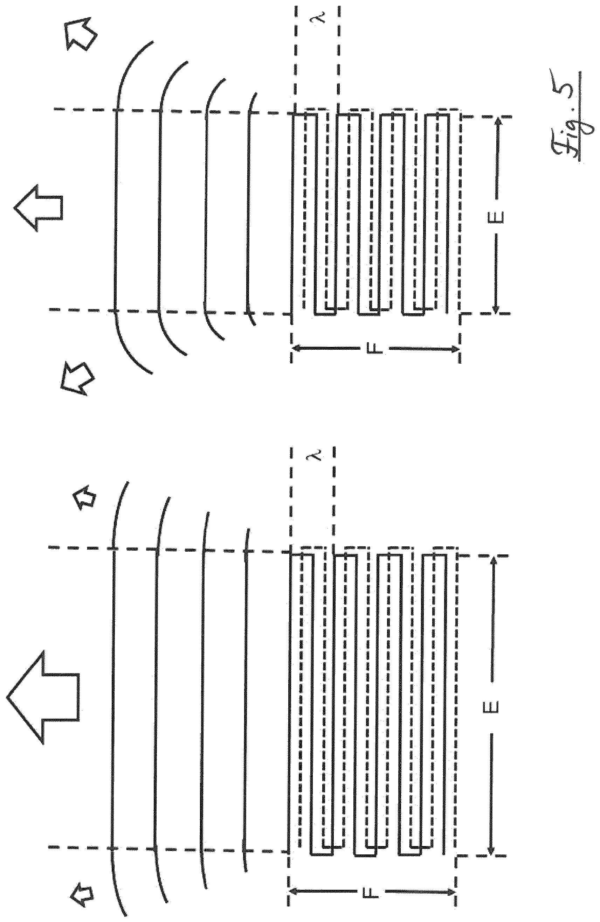

In Fig. 5 sind zwei Leiteranordnungen exemplarisch als Beispiele für ein Phased-Array-Setup auf EMAT-Basis in einer "entrollten" Position skizziert, die als Sendewandler 2 und/oder Empfangswandler 4 fungieren können und eine Erstreckung E aufweisen, die parallel zur Umfangsrichtung U des Objekts 6 ausgerichtet ist, wenn die Leiteranordnungen an oder in der Nähe der Objektwand 10 angeordnet sind. Um einen Hauptstrahl 16 mit geringer Divergenz zu erhalten, weist der Sendewandler 2 und/oder Empfangswandler 4 in Umfangsrichtung U eine Erstreckung E auf, die das 3-fache bis 10-fache der Wellenlänge λ, vorzugsweise 4-fache bis 8-fache der Wellenlänge λ der Ultraschallwelle 8 beträgt.

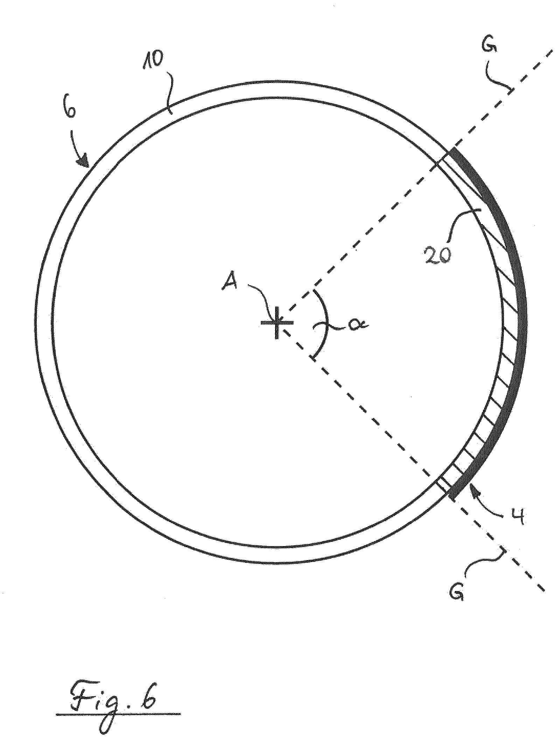

Fig. 6 dient zur Verdeutlichung des Begriffs "Sektor" bzw. "Sektorbreite" 20 und zeigt ein rohrförmiges Objekt 6 aus einer Perspektive in dessen Längsrichtung. Beispielhaft nimmt ein Empfangswandler 4 einen Sektor 20 (schraffiert) von 90° ein bzw. weist eine Sektorbreite 20 von 90° auf, wenn der Winkel α zwischen den Geraden G 90°beträgt.

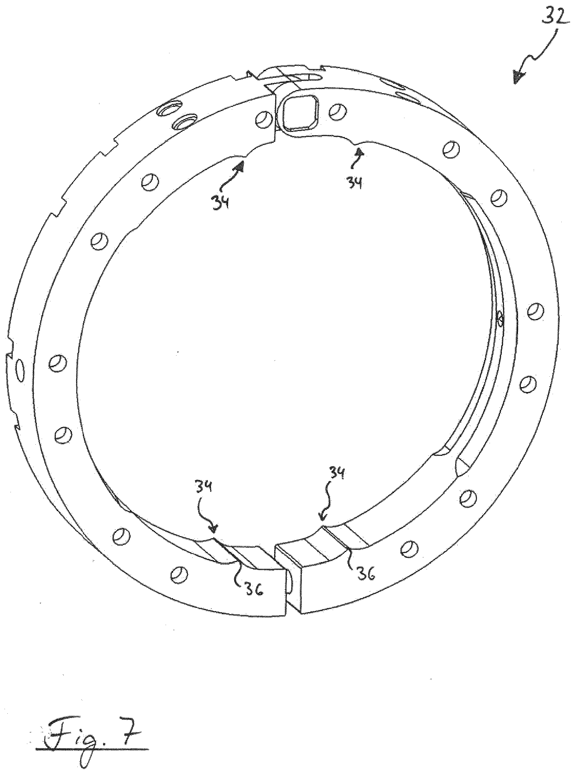

In Fig. 7 ist ein Befestigungsring 32 der Sensormechanik gezeigt. Der Befestigungsring 32 weist Kontaktmittel 34 auf, die jeweils eine linienförmige und in Längsrichtung des Objekts 6 verlaufende Kontaktstelle 36 zur Anlage an das Objekt 6 ausbilden.

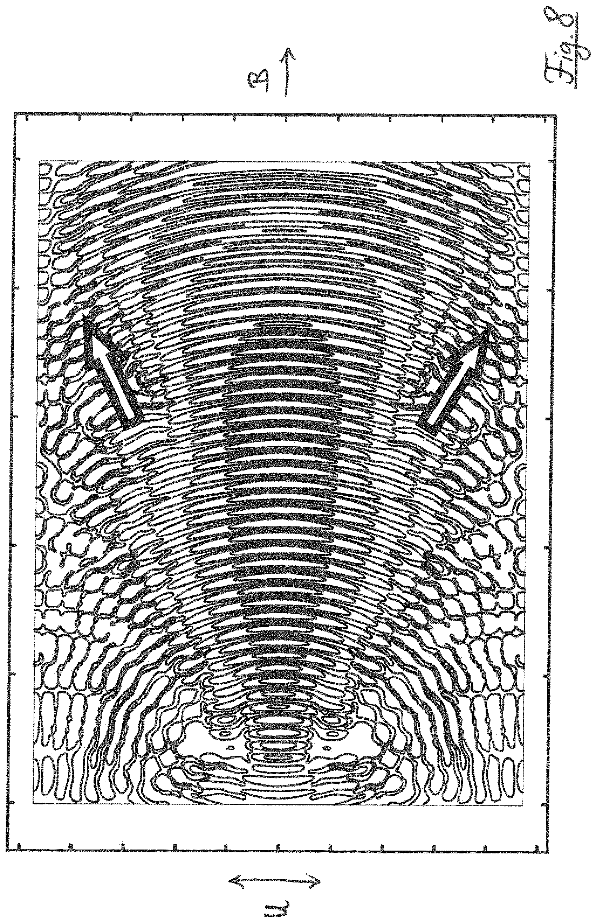

Fig. 8 zeigt ein Simulationsergebnis einer sich ausbreitenden Ultraschallwelle in einem rohrförmigen Objekt (projizierte Darstellung). Die horizontale Achse entspricht der Längsrichtung des Objekts, die vertikale Achse der Umfangsrichtung U. Die Longitudinalwelle breitet sich in Längsrichtung des Objekts aus (Ausbreitungsrichtung B), deren Hauptstrahl zentral verläuft. Auf beiden Seiten geht jeweils eine Nebenkeule der Longitudinalwelle ab (jeweilige Ausbreitungsrichtung der Nebenkeule hervorgehoben durch einen weißen Pfeil). Diese laufen im weiteren Verlauf gegensinnig um die Längsachse des Objekts herum und werden vom Empfangswandler detektiert, wobei das Nebenkeulensignal in der Auswertung des Nutzsignals zur Bestimmung des Flusses oder der Durchflussrate als Referenzsignal verwendet wird.

## Patentansprüche

1. Verfahren zur nichtinvasiven Bestimmung des Flusses oder der Durchflussrate in einem von einem gasförmigen Medium (7) durchströmten, elektrisch leitenden Objekt (6), insbesondere in einem Rohr oder einer Pipeline, mittels eines akustischen Durchflussmessers, wobei
an oder nahe der Objektwand (10) ein Sendewandler (2) des Durchflussmessers und in Längsrichtung des Objekts (6) beabstandet an oder nahe der Objektwand (10) ein Empfangswandler (4) des Durchflussmessers angeordnet wird,
mittels des Sendewandlers (2) eine insbesondere als Lamb-Welle ausgebildete Ultraschallwelle (8) in dem Objekt (6) erzeugt wird,
die teilweise als Longitudinalwelle (12) in das Medium (7) einkoppelt,
und ein Nutzsignal (14), das sich zumindest teilweise aufgrund der Longitudinalwelle (12) ergibt, von dem Empfangswandler (4) detektiert wird,
wobei über eine Auswertevorrichtung aus dem Nutzsignal (14) der Fluss oder die Durchflussrate bestimmt wird, **dadurch gekennzeichnet,**
**dass** der Sendewandler (2) in Umfangsrichtung (U) um eine Längsachse (A) des Objekts (6) in einer ersten Position und der Empfangswandler (4) in einer relativ zur ersten Position um die Längsachse (A) herum variierten zweiten Position außerhalb des Hauptstrahls (16) der Ultraschallwelle (8) angeordnet wird und die Breite (C) des Hauptstrahls (16) der Ultraschallwelle (8) auf einen Sektor (20) zwischen zwei Kontaktstellen (22) einer Sensormechanik beschränkt wird, insbesondere wobei die Kontaktstellen (22) bezogen auf den Hauptstrahl (16) und in Ausbreitungsrichtung (B) der Ultraschallwelle (8) hinter dem Empfangswandler (4) angeordnet sind.

2. Verfahren zur nichtinvasiven Bestimmung des Flusses oder der Durchflussrate in einem von wenigstens einem gasförmigen Medium (7) durchströmten, elektrisch leitenden Objekt (6), insbesondere in einem Rohr oder einer Pipeline, mittels eines akustischen Durchflussmessers, insbesondere nach Anspruch 1, wobei an oder nahe der Objektwand (10) ein Sendewandler (2) des Durchflussmessers und in Längsrichtung des Objekts (6) beabstandet an oder nahe der Objektwand (10) ein Empfangswandler (4) des Durchflussmessers angeordnet wird, mittels des Sendewandlers (2) eine insbesondere als Lamb-Welle ausgebildete Ultraschallwelle (8) in dem Objekt (6) erzeugt wird,
die teilweise als Longitudinalwelle (12) in das Medium (7) einkoppelt,
und ein Nutzsignal (14), das sich zumindest teilweise aufgrund der Longitudinalwelle (12) ergibt, von dem Empfangswandler (4) detektiert wird,
wobei über eine Auswertevorrichtung aus dem Nutzsignal (14) der Fluss oder die Durchflussrate bestimmt wird, **dadurch gekennzeichnet,**
**dass** der Empfangswandler (4) zusätzlich zum Nutzsignal (14) zumindest eine Nebenkeule (24) der Ultraschallwelle (8) detektiert, und zumindest ein Nebenkeulensignal (26) in der Auswertung des Nutzsignals (14) zur Bestimmung des Flusses oder der Durchflussrate als Referenzsignal verwendet wird.

3. Verfahren nach Anspruch 2, **dadurch gekennzeichnet, dass** Sende- und Empfangswandler (2, 4) dergestalt ausgelegt werden, dass Nebenkeulensignal (26) und Nutzsignal (14) für die Auswertung verstärkt werden, wobei die Verstärkungsfaktoren in derselben Größenordnung liegen.

4. Verfahren nach Anspruch 2 oder 3, **dadurch gekennzeichnet, dass** der Empfangswandler (4) in Längsrichtung des Objekts (6) so positioniert wird, dass sich die Amplituden zweier gegensinnig um die Längsachse (A) des Objekts (6) herumlaufender Nebenkeulen (24) am Empfangswandler (4) überlagern.

5. Verfahren nach einem der vorherigen Ansprüche, **dadurch gekennzeichnet, dass** aus einer Perspektive in Längsrichtung des Objekts (6) der Empfangswandler (4) gegenüber dem Sendewandler (2) positioniert wird.

6. Verfahren nach einem der vorherigen Ansprüche, **dadurch gekennzeichnet, dass** die Breite (C) des Hauptstrahls (16) der Ultraschallwelle (8) über ein Phased-Array-Setup des zumindest einen Sendewandlers (2) auf Höhe des Empfangswandlers (4) in der Umfangsrichtung (U) auf eine Sektorbreite (20) von weniger als 120° beschränkt wird.

7. Verfahren nach einem der vorherigen Ansprüche, **dadurch gekennzeichnet, dass** bezogen auf eine Längsrichtung des Objekts (6) der Empfangswandler (4) in einem Abstand (d1) kleiner D/2 von der Kontaktstelle (22) der Sensormechanik positioniert wird.

8. Verfahren nach einem der vorherigen Ansprüche, **dadurch gekennzeichnet, dass** bezogen auf eine Längsrichtung des Objekts (6) der Mittelpunkt des Empfangswandlers (4) in einem Abstand (d2) kleiner als 1,5*D, vorzugsweise kleiner als 4/3*D, von der Kontaktstelle (22) der Sensormechanik positioniert wird.

9. Verfahren nach einem der vorherigen Ansprüche, **dadurch gekennzeichnet, dass** zur Erzeugung der Ultraschallwelle (8) in dem Objekt (6) ein statisches oder quasistatisches, erstes Magnetfeld erzeugt wird, welches mit einem von dem Sendewandler (2) in einem oberflächennahen Bereich des Objekts (6) erzeugten, variierenden weiteren Magnetfeld wechselwirkt.

10. Verfahren nach einem der vorherigen Ansprüche, **dadurch gekennzeichnet, dass** ein Paar Sende- und Empfangswandler (2, 4) einerseits und ein weiteres Sende- und Empfangswandlerpaar (2, 4) andererseits am Objekt (6) angeordnet werden und zur Bestimmung des Flusses oder der Durchflussrate sowohl in Richtung des Flusses sowie in die Gegenrichtung gemessen wird.

11. Verfahren nach einem der Ansprüche 1 bis 9, **dadurch gekennzeichnet, dass** als Sende- und/oder Empfangswandler (2, 4) eine Leiteranordnung verwendet wird, die sowohl zum Senden der Ultraschallwelle (8) als auch zum Empfangen des Nutzsignals (14) ausgelegt ist, und zur Bestimmung des Flusses oder der Durchflussrate sowohl in Richtung des Flusses sowie in die Gegenrichtung gemessen wird.

12. Verfahren nach einem der vorherigen Ansprüche, **dadurch gekennzeichnet, dass** der Sende- und/oder Empfangswandler (2) in einem Frequenzbereich von 50 kHz bis 300 kHz, bevorzugt von 100 kHz bis 210 kHz, betrieben wird.

13. Akustischer Durchflussmesser zur nichtinvasiven Bestimmung des Flusses oder der Durchflussrate in einem von einem gasförmigen Medium (7) durchströmten, elektrisch leitenden Objekt (6), insbesondere in einem Rohr oder einer Pipeline und zur Durchführung des Verfahrens nach einem der vorherigen Ansprüche,
mit einem an oder nahe der Objektwand (10) zu positionierenden Sendewandler (2) und einem in Längsrichtung des Objekts (6) beabstandet an oder nahe der Objektwand (10) anzuordnenden Empfangswandler (4), wobei der Durchflussmesser zur Erzeugung einer insbesondere als Lamb-Welle ausgebildeten Ultraschallwelle (8) in dem Objekt (6) und zur Detektion eines Nutzsignals (14) auslegt ist,
mit einer Sensormechanik zur Verbindung des Durchflussmessers mit dem Objekt (6), sowie mit einer Auswertevorrichtung, mittels der aus dem Nutzsignal (14) der Fluss oder die Durchflussrate bestimmbar ist, **dadurch gekennzeichnet,**
**dass** der Sendewandler (2) in Umfangsrichtung (U) um eine Längsachse (A) des Objekts (6) in einer ersten Position und der Empfangswandler (4) in einer relativ zur ersten Position um die Längsachse (A) herum variierten zweiten Position außerhalb des Hauptstrahls (16) der Ultraschallwelle (8) angeordnet ist, wobei der Empfangswandler (4) und der Sendewandler (2) bezogen auf eine Längsachse (A) des zwischen diesen anzuordnenden Objekts (6) eine Sektorbreite (20) kleiner 120°, vorzugsweise kleiner oder gleich 90°, insbesondere kleiner 80°, aufweisen und Kontaktmittel (34) der Sensormechanik in Richtung der Längsachse (A) betrachtet außerhalb der von Empfangswandler (4) und Sendewandler (2) aufgespannten Sektoren (20) angeordnet sind.

14. Vorrichtung nach Anspruch 13, **dadurch gekennzeichnet, dass** betrachtet von dem Sende- zu dem Empfangswandler (2, 4) und bezogen auf eine Längsachse (A) des Objekts (6) die dem Empfangswandler (4) zuzuordnenden Kontaktmittel (34) hinter dem Empfangswandler (4) angeordnet sind.

15. Vorrichtung nach Anspruch 13 oder 14, **dadurch gekennzeichnet, dass** der Sende- und/oder Empfangswandler (2, 4) in Umfangsrichtung (U) eine Erstreckung (E) aufweist, die das 3-fache bis 10-fache der Wellenlänge (λ), vorzugsweise 4-fache bis 8-fache der Wellenlänge (λ) der Ultraschallwelle (8) beträgt.

16. Vorrichtung nach einem der Ansprüche 13 bis 15, **dadurch gekennzeichnet, dass** der Sende- und/oder Empfangswandler (2, 4) entsprechend einer Wellenlänge (λ) im Bereich von 5 mm bis 20 mm, bevorzugt von 10 mm bis 16 mm, ausgebildet ist.

17. Vorrichtung nach Anspruch 15 oder 16, **dadurch gekennzeichnet, dass** die Erstreckung (E) des Sende- und/oder Empfangswandlers (2, 4) 25 mm bis 150 mm, bevorzugt 40 mm bis 120 mm, beträgt und eine senkrecht zur Erstreckung (E) verlaufende Breite (F) des Sende- und/oder Empfangswandlers (2, 4) 75 mm bis 100 mm, bevorzugt 85 mm, beträgt.

18. Vorrichtung nach einem der Ansprüche 13 bis 17, **dadurch gekennzeichnet, dass** bezogen auf eine Längsrichtung des Objekts (6) der Empfangswandler (4) in einem Abstand (d1) kleiner D/2 von der Kontaktstelle (22) der Sensormechanik angeordnet ist.

19. Vorrichtung nach einem der Ansprüche 13 bis 18, **dadurch gekennzeichnet, dass** bezogen auf eine Längsrichtung des Objekts (6) der Mittelpunkt des Empfangswandlers (4) in einem Abstand (d2) kleiner als das 1,5*D, vorzugsweise kleiner als 4/3*D, von der Kontaktstelle (22) der Sensormechanik positioniert wird.

20. Vorrichtung nach einem der Ansprüche 13 bis 19, **dadurch gekennzeichnet, dass** Sende- und/oder Empfangswandler (2, 4) von einer Leiteranordnung ausgebildet werden, die sowohl zum Senden der Ultraschallwelle (8) als auch zum Empfangen des Nutzsignals (14) ausgelegt ist.

21. Vorrichtung nach einem der Ansprüche 13 bis 20, **dadurch gekennzeichnet, dass** zumindest ein Kontaktmittel (34) wenigstens eine linienförmige und insbesondere in Längsrichtung des Objekts verlaufende Kontaktstelle (36) zur Anlage an das Objekt (6) ausbildet.

22. Vorrichtung nach einem der Ansprüche 13 bis 21, **dadurch gekennzeichnet, dass** zumindest ein Kontaktmittel (34) wenigstens eine punktförmige Kontaktstelle zur Anlage an das Objekt ausbildet.

23. Vorrichtung nach einem der Ansprüche 13 bis 22, **dadurch gekennzeichnet, dass** zumindest ein Kontaktmittel (34) aus einem harten Material, insbesondere aus Metall, besteht.

## Claims

1. Method for noninvasive determination of the flow or the flow rate in an electrically conductive object (6), through which a gaseous medium (7) flows, in particular in a pipe or a pipeline, by means of an acoustic flow meter, wherein
an emitting transducer (2) of the flow meter is arranged on or close to the object wall (10) and a receiving transducer (4) of the flow meter is arranged spaced apart in the longitudinal direction of the object (6) on or close to the object wall (10),
an ultrasonic wave (8), formed in particular as a Lamb wave, is generated in the object (6) by means of the emitting transducer (2),
which is partially coupled as a longitudinal wave (12) into the medium (7),
and a useful signal (14), which at least partially results due to the longitudinal wave (12), is detected by the receiving transducer (4),
wherein the flow or the flow rate is determined from the useful signal (14) via an evaluation device, **characterized in that**
the emitting transducer (2) is arranged in a first position in the circumferential direction (U) around a longitudinal axis (A) of the object (6), and the receiving transducer (4) is arranged in a second position, varied in relation to the first position around the longitudinal axis (A), outside the main beam (16) of the ultrasonic wave (8), and the width (C) of the main beam (16) of the ultrasonic wave (8) is restricted to a sector (20) between two contact points (22) of a sensor mechanism, in particular wherein the contact points (22) are arranged behind the receiving transducer (4) with respect to the main beam (16) and in the propagation direction (B) of the ultrasonic wave (8).

2. Method for noninvasive determination of the flow or the flow rate in an electrically conductive object (6), through which at least one gaseous medium (7) flows, in particular in a pipe or a pipeline, by means of an acoustic flow meter, in particular according to Claim 1, wherein
an emitting transducer (2) of the flow meter is arranged on or close to the object wall (10) and a receiving transducer (4) of the flow meter is arranged spaced apart in the longitudinal direction of the object (6) on or close to the object wall (10),
an ultrasonic wave (8), formed in particular as a Lamb wave, is generated in the object (6) by means of the emitting transducer (2),
which is partially coupled as a longitudinal wave (12) into the medium (7),
and a useful signal (14), which at least partially results due to the longitudinal wave (12), is detected by the receiving transducer (4),
wherein the flow or the flow rate is determined from the useful signal (14) via an evaluation device, **characterized in that**
the receiving transducer (4) detects at least one side lobe (24) of the ultrasonic wave (8) in addition to the useful signal (14), and at least one side lobe signal (26) is used as a reference signal in the evaluation of the useful signal (14) to determine the flow or the flow rate.

3. Method according to Claim 2, **characterized in that** emitting and receiving transducers (2, 4) are designed in such a way that side lobe signal (26) and useful signal (14) are amplified for the evaluation, wherein the amplification factors are in the same order of magnitude.

4. Method according to Claim 2 or 3, **characterized in that** the receiving transducer (4) is positioned in the longitudinal direction of the object (6) such that the amplitudes of two side lobes (24) extending around the longitudinal axis (A) of the object (6) in opposite directions are superimposed at the receiving transducer (4) .

5. Method according to any one of the preceding claims, **characterized in that** the receiving transducer (4) is positioned opposite to the emitting transducer (2) from a perspective in the longitudinal direction of the object (6) .

6. Method according to any one of the preceding claims, **characterized in that** the width (C) of the main beam (16) of the ultrasonic wave (8) is restricted to a sector width (20) of less than 120° via a phased-array setup of the at least one emitting transducer (2) at the height of the receiving transducer (4) in the circumferential direction (U).

7. Method according to any one of the preceding claims, **characterized in that** the receiving transducer (4) is positioned at a distance (d1) less than D/2 from the contact point (22) of the sensor mechanism with respect to a longitudinal direction of the object (6).

8. Method according to any one of the preceding claims, **characterized in that** the center point of the receiving transducer (4) is positioned at a distance (d2) less than 1.5*D, preferably less than 4/3*D, from the contact point (22) of the sensor mechanism with respect to a longitudinal direction of the object (6).

9. Method according to any one of the preceding claims, **characterized in that**, to generate the ultrasonic wave (8) in the object (6), a static or quasi-static first magnetic field is generated, which interacts with a varying further magnetic field generated by the emitting transducer (2) in a surface-proximal region of the object (6) .

10. Method according to any one of the preceding claims, **characterized in that** one pair of emitting and receiving transducers (2, 4), on the one hand, and a further pair of emitting and receiving transducers (2, 4), on the other hand, are arranged on the object (6) and measurement is performed both in the direction of the flow and in the opposite direction to determine the flow or the flow rate.

11. Method according to any one of Claims 1 to 9, **characterized in that** a conductor arrangement is used as the emitting and/or receiving transducer (2, 4), which is designed both to emit the ultrasonic wave (8) and to receive the useful signal (14), and measurement is performed both in the direction of the flow and in the opposite direction to determine the flow or the flow rate.

12. Method according to any one of the preceding claims, **characterized in that** the emitting and/or receiving transducer (2) is operated in a frequency range of 50 kHz to 300 kHz, preferably of 100 kHz to 210 kHz.

13. Acoustic flow meter for noninvasive determination of the flow or the flow rate in an electrically conductive object (6), through which a gaseous medium (7) flows, in particular in a pipe or a pipeline and for carrying out the method according to any one of the preceding claims, having an emitting transducer (2) to be positioned on or close to the object wall (10) and a receiving transducer (4) to be arranged spaced apart in the longitudinal direction of the object (6) on or close to the object wall (10), wherein the flow meter is designed to generate an ultrasonic wave (8), formed in particular as a Lamb wave, in the object (6) and to detect a useful signal (14), having a sensor mechanism for connecting the flow meter to the object (6), and having an evaluation device, by means of which the flow or the flow rate is determinable from the useful signal (14), **characterized in that** the emitting transducer (2) is arranged in a first position in the circumferential direction (U) around a longitudinal axis (A) of the object (6), and the receiving transducer (4) is arranged in a second position, varied in relation to the first position around the longitudinal axis (A), outside the main beam (16) of the ultrasonic wave (8), wherein the receiving transducer (4) and the emitting transducer (2) have a sector width (20) less than 120°, preferably less than or equal to 90°, in particular less than 80°, with respect to a longitudinal axis (A) of the object (6) to be arranged between them, and contact means (34) of the sensor mechanism, viewed in the direction of the longitudinal axis (A), are arranged outside the sectors (20) spanned by receiving transducer (4) and emitting transducer (2).

14. Device according to Claim 13, **characterized in that**, viewed from the emitting to the receiving transducer (2, 4) and with respect to a longitudinal axis (A) of the object (6), the contact means (34) to be associated with the receiving transducer (4) are arranged behind the receiving transducer (4).

15. Device according to Claim 13 or 14, **characterized in that** the emitting and/or receiving transducer (2, 4) has an extension (E) in the circumferential direction (U) which is 3 times to 10 times the wavelength (λ), preferably 4 times to 8 times the wavelength (λ) of the ultrasonic wave (8).

16. Device according to any one of Claims 13 to 15, **characterized in that** the emitting and/or receiving transducer (2, 4) is designed corresponding to a wavelength (λ) in the range of 5 mm to 20 mm, preferably of 10 mm to 16 mm.

17. Device according to Claim 15 or 16, **characterized in that** the extension (E) of the emitting and/or receiving transducer (2, 4) is 25 mm to 150 mm, preferably 40 mm to 120 mm, and a width (F) of the emitting and/or receiving transducer (2, 4) extending perpendicularly to the extension (E) is 75 mm to 100 mm, preferably 85 mm.

18. Device according to any one of Claims 13 to 17, **characterized in that** the receiving transducer (4) is arranged at a distance (d1) less than D/2 from the contact point (22) of the sensor mechanism with respect to a longitudinal direction of the object (6).

19. Device according to any one of Claims 13 to 18, **characterized in that** the center point of the receiving transducer (4) is positioned at a distance (d2) less than 1.5*D, preferably less than 4/3*D, from the contact point (22) of the sensor mechanism with respect to a longitudinal direction of the object (6).

20. Device according to any one of Claims 13 to 19, **characterized in that** emitting and/or receiving transducers (2, 4) are formed by a conductor arrangement, which is designed both to emit the ultrasonic wave (8) and also to receive the useful signal (14).

21. Device according to any one of Claims 13 to 20, **characterized in that** at least one contact means (34) forms at least one linear contact point (36), extending in particular in the longitudinal direction of the object, for contact on the object (6).

22. Device according to any one of Claims 13 to 21, **characterized in that** at least one contact means (34) forms at least one punctiform contact point for contact on the object.

23. Device according to any one of Claims 13 to 22, **characterized in that** at least one contact means (34) consists of a hard material, in particular of metal.

## Revendications

1. Procédé de détermination non invasive du flux ou du débit dans un objet électriquement conducteur (6) traversé par un milieu gazeux (7), notamment dans un tube ou une canalisation, à l'aide d'un débitmètre acoustique,
un transducteur d'émission (2) du débitmètre étant disposé sur ou à proximité de la paroi (10) de l'objet et un transducteur de réception (4) du débitmètre étant disposé sur ou à proximité de la paroi (10) de l'objet à distance dans la direction longitudinale de l'objet (6),
une onde ultrasonore (8), notamment conçue comme une onde de Lamb, étant générée dans l'objet (6) au moyen du transducteur d'émission (2), laquelle onde est injectée par couplage dans le milieu (7) partiellement sous la forme d'une onde longitudinale (12) et
un signal utile (14), qui est obtenu au moins partiellement sur la base de l'onde longitudinale (12), étant détecté par le transducteur de réception (4),
le flux ou le débit étant déterminé à partir du signal utile (14) par le biais d'un dispositif d'évaluation, **caractérisé en ce que**
le transducteur d'émission (2) est disposé dans une première position dans la direction circonférentielle (U) autour d'un axe longitudinal (A) de l'objet (6) et le transducteur de réception (4) est disposé dans une deuxième position, qui varie autour de l'axe longitudinal (A) par rapport à la première position, à l'extérieur du faisceau principal (16) de l'onde ultrasonore (8) et la largeur (C) du faisceau principal (16) de l'onde ultrasonore (8) est limitée à un secteur (20) entre deux points de contact (22) d'un mécanisme de capteur, en particulier les points de contact (22) étant disposés en arrière du transducteur de réception (4) par rapport au faisceau principal (16) et dans la direction de propagation (B) de l'onde ultrasonore (8).

2. Procédé de détermination non invasive du flux ou du débit dans un objet électriquement conducteur (6) traversé par au moins un milieu gazeux (7), notamment dans un tube ou une canalisation, au moyen d'un débitmètre acoustique, notamment selon la revendication 1,
un transducteur d'émission (2) du débitmètre étant disposé sur ou à proximité de la paroi (10) de l'objet et un transducteur de réception (4) du débitmètre étant disposé sur ou à proximité de la paroi (10) de l'objet à distance dans la direction longitudinale de l'objet (6),
une onde ultrasonore (8), notamment conçue comme une onde de Lamb, étant générée dans l'objet (6) au moyen du transducteur d'émission (2), laquelle onde est injectée par couplage dans le milieu (7) partiellement sous la forme d'une onde longitudinale (12),
et un signal utile (14), qui est obtenu au moins partiellement sur la base de l'onde longitudinale (12), étant détecté par le transducteur de réception (4),
le flux ou le débit étant déterminé à partir du signal utile (14) par le biais d'un dispositif d'évaluation, **caractérisé en ce que**
le transducteur de réception (4) détecte au moins un lobe latéral (24) de l'onde ultrasonore (8) en plus du signal utile (14), et au moins un signal de lobe latéral (26) est utilisé comme signal de référence dans l'évaluation du signal utile (14) pour déterminer le flux ou le débit.

3. Procédé selon la revendication 2, **caractérisé en ce que** les transducteurs d'émission et de réception (2, 4) sont conçus de manière que le signal de lobe latéral (26) et le signal utile (14) soient amplifiés pour l'évaluation, les facteurs d'amplification étant du même ordre de grandeur.

4. Procédé selon la revendication 2 ou 3, **caractérisé en ce que** le transducteur de réception (4) est positionné dans la direction longitudinale de l'objet (6) de telle sorte que les amplitudes de deux lobes latéraux (24), qui s'étendent en sens contraire autour de l'axe longitudinal (A) de l'objet (6), se superposent au niveau du transducteur de réception (4).

5. Procédé selon l'une des revendications précédentes, **caractérisé en ce que**, lorsque l'on regarde dans la direction longitudinale de l'objet (6), le transducteur de réception (4) est positionné en regard du transducteur d'émission (2).

6. Procédé selon l'une des revendications précédentes, **caractérisé en ce qu'**un montage en réseau piloté en phase de l'au moins un transducteur d'émission (2) au niveau du transducteur de réception (4) dans la direction circonférentielle (U), permet de limiter la largeur (C) du faisceau principal (16) de l'onde ultrasonore (8) à une largeur de secteur (20) inférieure à 120°.

7. Procédé selon l'une des revendications précédentes, **caractérisé en ce que** le transducteur de réception (4) est positionné à une distance (d1) inférieure à D/2 du point de contact (22) du mécanisme de capteur par rapport à une direction longitudinale de l'objet (6).

8. Procédé selon l'une des revendications précédentes, **caractérisé en ce que**, par rapport à une direction longitudinale de l'objet (6), le point central du transducteur de réception (4) est positionné à une distance (d2) inférieure à 1,5*D, de préférence inférieure à 4/3*D, du point de contact (22) du mécanisme de capteur.

9. Procédé selon l'une des revendications précédentes, **caractérisé en ce que** pour générer l'onde ultrasonore (8) dans l'objet (6), un premier champ magnétique, statique ou quasi-statique, est généré qui interagit avec un autre champ magnétique variable qui est généré par le transducteur d'émission (2) dans une région de l'objet (6) proche de la surface.

10. Procédé selon l'une des revendications précédentes, **caractérisé en ce qu'**une paire de transducteurs d'émission et de réception (2, 4) d'une part et une autre paire de transducteurs d'émission et de réception (2, 4) d'autre part sont disposées sur l'objet (6) et une mesure est effectuée aussi bien dans le sens du flux que dans le sens opposé afin de déterminer le flux ou le débit.

11. Procédé selon l'une des revendications 1 à 9, **caractérisé en ce qu'**un ensemble de conducteurs est utilisé comme transducteur d'émission et/ou de réception (2, 4), lequel ensemble sert aussi bien à émettre l'onde ultrasonore (8) qu'à recevoir le signal utile (14) et une mesure est effectuée pour déterminer le flux ou le débit aussi bien dans le sens du flux que dans le sens opposé.

12. Procédé selon l'une des revendications précédentes, **caractérisé en ce que** le transducteur d'émission et/ou de réception (2) est utilisé dans une gamme de fréquence de 50 kHz à 300 kHz, de préférence de 100 kHz à 210 kHz.

13. Débitmètre acoustique destiné à la détermination non invasive du flux ou du débit dans un objet électriquement conducteur (6) traversé par un milieu gazeux (7), notamment dans un tube ou une canalisation, et à la mise en œuvre du procédé selon l'une des revendications précédentes, ledit débitmètre acoustique comprenant
un transducteur d'émission (2) à positionner sur ou à proximité de la paroi (10) de l'objet et un transducteur de réception (4) à disposer sur ou à proximité de la paroi (10) de l'objet à distance dans la direction longitudinale de l'objet (6), le débitmètre étant conçu pour générer une onde ultrasonore (8), notamment sous la forme d'une onde de Lamb, dans l'objet (6) et pour détecter un signal utile (14),
un mécanisme de capteur destiné à relier le débitmètre à l'objet (6), et à un dispositif d'évaluation au moyen duquel le flux ou le débit peut être déterminé à partir du signal utile (14), **caractérisé en ce que**
le transducteur d'émission (2) est disposé dans une première position dans la direction circonférentielle (U) autour d'un axe longitudinal (A) de l'objet (6) et le transducteur de réception (4) est disposé dans une deuxième position, qui varie autour de l'axe longitudinal (A) par rapport à la première position, à l'extérieur du faisceau principal (16) de l'onde ultrasonore (8), le transducteur d'émission (2) et le transducteur de réception (4) ayant une largeur de secteur (20) inférieure à 120°, de préférence inférieure ou égale à 90°, en particulier inférieure à 80°, par rapport à un axe longitudinal (A) de l'objet (6) à disposer entre ceux-ci et des moyens de contact (34) du mécanisme de capteur étant disposés à l'extérieur des secteurs (20) passant par le transducteur de réception (4) et le transducteur d'émission (2), lorsque l'on regarde en direction de l'axe longitudinal (A).

14. Dispositif selon la revendication 13, **caractérisé en ce que**, lorsque l'on regarde depuis le transducteur d'émission en direction du transducteur de réception (2, 4) et par rapport à un axe longitudinal (A) de l'objet (6), les moyens de contact (34) à associer au transducteur de réception (4) sont disposés en arrière du transducteur de réception (4).

15. Dispositif selon la revendication 13 ou 14, **caractérisé en ce que** le transducteur d'émission et/ou de réception (2, 4) a dans la direction circonférentielle (U) une étendue (E) qui est de 3 fois à 10 fois la longueur d'onde (λ), de préférence de 4 fois à 8 fois la longueur d'onde (λ) de l'onde ultrasonore (8).

16. Dispositif selon l'une des revendications 13 à 15, **caractérisé en ce que** le transducteur d'émission et/ou de réception (2, 4) est conçu conformément à une longueur d'onde (λ) comprise dans la gamme allant de 5 mm à 20 mm, de préférence de 10 mm à 16 mm.

17. Dispositif selon la revendication 15 ou 16, **caractérisé en ce que** l'étendue (E) du transducteur d'émission et/ou de réception (2, 4) est de 25 mm à 150 mm, de préférence de 40 mm à 120 mm, et une largeur (F), perpendiculaire à l'étendue (E) , du transducteur d'émission et/ou de réception (2, 4) est de 75 mm à 100 mm, de préférence de 85 mm.

18. Dispositif selon l'une des revendications 13 à 17, **caractérisé en ce que**, par rapport à une direction longitudinale de l'objet (6), le transducteur de réception (4) est disposé à une distance (d1) inférieure à D/2 du point de contact (22) du mécanisme de capteur.

19. Dispositif selon l'une des revendications 13 à 18, **caractérisé en ce que**, par rapport à une direction longitudinale de l'objet (6), le point central du transducteur de réception (4) est positionné à une distance (d2) inférieure à 1,5*D, de préférence inférieure à 4/3*D, du point de contact (22) du mécanisme de capteur.

20. Dispositif selon l'une des revendications 13 à 19, **caractérisé en ce que** les transducteurs d'émission et/ou de réception (2, 4) sont formés par un ensemble de conducteurs qui sont conçus aussi bien pour émettre l'onde ultrasonore (8) que pour recevoir le signal utile (14).

21. Dispositif selon l'une des revendications 13 à 20, **caractérisé en ce qu'**au moins un moyen de contact (34) forme au moins un point de contact linéaire (36), notamment s'étendant dans la direction longitudinale de l'objet, destiné à venir en appui sur l'objet (6).

22. Dispositif selon l'une des revendications 13 à 21, **caractérisé en ce qu'**au moins un moyen de contact (34) forme au moins un point de contact ponctuel destiné à venir en appui sur l'objet.

23. Dispositif selon l'une des revendications 13 à 22, **caractérisé en ce qu'**au moins un moyen de contact (34) est en un matériau dur, notamment en métal.
